# EUROPÄISCHE PATENTANMELDUNG

(11) **EP 2 570 978 A1**
(43) Veröffentlichungstag der Anmeldung: **20.03.2013**
(21) Anmeldenummer: 12181339.8
(22) Anmeldetag: 22.08.2012
(51) Int. Cl.: G06Q 10/00

(54) **Golfplatzverwaltungssystem**

(30) Priorität: 15.09.2011 DE 102011053639
(71) Anmelder: Viscan Solutions GmbH, 72505 Krauchenwies (DE)
(72) Erfinder: Nolle, Nicolai, 72510 Stetten (DE)
(74) Vertreter: Albrecht, Ralf

(57) **Zusammenfassung**

Die Erfindung betrifft ein Golfplatzverwaltungssystem (10) mit einem Lokalserver (12), einem mit dem Lokalserver (12) verbundenen elektronischen Leaderboard (14) und mehreren tragbaren, eine Positionsbestimmungseinrichtung (22) aufweisenden und mit dem Lokalserver (12) kommunizierenden Eingabegeräten (16), wobei die Eingabegeräte (16) und der Lokalserver (12) derart eingerichtet und miteinander gekoppelt sind, dass von Spielern (S) in die Eingabegeräte (16) eingegebene Scores und von den Positionsbestimmungseinrichtungen (22) ermittelte Positionsdaten der Eingabegeräte (16) von den Eingabegeräten (16) an den Lokalserver (12) übertragen werden.

## Beschreibung

Die vorliegende Erfindung betrifft ein Golfplatzverwaltungssystem zum Überwachen des Spielbetriebs auf einem Golfplatz und zur Ausrichtung und Leitung eines auf dem Golfplatz stattfindenden Golfturniers.

Golfplatzverwaltungssysteme sind im Stand der Technik in unterschiedlichsten Ausgestaltungen bekannt. In der einfachsten Ausführung wird ein handelsüblicher Rechner verwendet, auf dem ein Verwaltungssystem in Form eines Computerprogramms installiert ist. Das Computerprogramm ermöglicht normalerweise die Verwaltung der Golfclubmitglieder, die Verwaltung der Handicaps, die Verwaltung von Greenfee-Gästen, die Auswertung von Einzelscores und von Turnierergebnissen, etc.

Will beispielsweise ein Gast auf einem Golfplatz spielen, so meldet sich dieser zunächst im Sekretariat an und bezahlt dort die Greenfeegebühr. Im Gegenzug erhält er einen Greenfee-Pass, den er gut sichtbar außen an seinem Golfbag befestigt. Anhand des Greenfee-Passes kann die Platzaufsicht dann erkennen, ob ein Gastspieler ordnungsgemäß die Greenfeegebühr entrichtet hat. Hierzu ist es allerdings erforderlich, dass die Platzaufsicht auf dem Golfplatz spielende Spieler kontrolliert, was, wenn dies in hoher Frequenz erfolgen soll, sehr personal- und zeitintensiv ist.

Wird ein Turnier auf dem Golfplatz ausgerichtet, so melden sich die an dem Turnier teilnehmenden Spieler ebenfalls im Sekretariat an. Dort erhalten sie ihre Score-Karte und ihre Abschlagszeit. Ferner werden sie über ihre Flightmitglieder unterrichtet. Weitere Informationen über die Spielart, wie beispielsweise Zählspiel, Stableford oder dergleichen, die aktuellen Positionen der Fahnen der einzelnen Spielbahnen, die zu verwendenden Abschläge etc. sind meist an Informationstafeln gesondert angeschlagen. Zur Abschlagszeit findet sich dann jeder Spieler an der Startspielbahn ein. Dort werden die Scorekarten unter den Spielern eines Flights ausgetauscht, so dass jeder Spieler die Schläge eines anderen Spielers zählt. Sobald der vorweg spielende Flight ausreichend weit entfernt ist, kann dann abgeschlagen werden. Nach Beenden jeder Spielbahn wird die Anzahl der Schläge jedes Spielers auf den entsprechenden Scorekarten notiert. Nach Beenden der letzten Spielbahn werden dann die notierten Scores miteinander verglichen und die Scorekarten von den jeweiligen Spielern und Zählern unterzeichnet. Die Scorekarten werden daraufhin im Sekretariat abgegeben. Nunmehr gibt die Turnierleitung die auf den Scorekarten notierten Scores mit hohem Zeitaufwand manuell in das Computerprogramm ein, das daraufhin die Gesamtauswertung vornimmt.

Bei großen Turnieren, zu denen viele Zuschauer erwartet werden, ist es zudem bekannt, die aktuellen Spielstände auf einem so genannten elektronischen Leaderboard anzuzeigen. Hierzu ist es erforderlich, der Turnierleitung die von den einzelnen Spielern auf jeder Bahn erzielten Ergebnisse unmittelbar nach Beenden der Spielbahn mitzuteilen. Zu diesem Zweck werden seitens der Turnierleitung normalerweise Spielbeobachter eingesetzt, die am Ende jeder Spielbahn die Scores der Einzelspieler erfragen und fernmündlich oder via SMS an die Spielleitung weiterleiten. Diese gibt dann die übermittelten Scores manuell in das Computerprogramm ein, woraufhin die auf dem Leaderboard angezeigten Zwischenergebnisse automatisch aktualisiert werden. Diese Vorgehensweise ist aber ebenfalls sehr personal- und zeitaufwändig.

Ausgehend von diesem Stand der Technik ist es eine Aufgabe der vorliegenden Erfindung, ein Golfplatzverwaltungssystem zu schaffen, das eine personal- und zeitoptimierte Verwaltung sowohl des Spielbetriebs eines Golfplatzes als auch der Abwicklung eines auf dem Golfplatz stattfindenden Golfturniers ermöglicht. Darüber hinaus soll ein Golfplatzverwaltungssystem mit erweiterten Funktionen bereitgestellt werden.

Zur Lösung dieser Aufgabe schafft die vorliegende Erfindung ein Golfplatzverwaltungssystem mit einem Lokalserver, einem mit dem Lokalserver verbundenen elektronischen Leaderboard und mehreren tragbaren, eine Positionsbestimmungseinrichtung aufweisenden und mit dem Lokalserver kommunizierenden Eingabegeräten, wobei die Eingabegeräte und der Lokalserver derart eingerichtet und miteinander gekoppelt sind, dass von Spielern in die Eingabegeräte eingegebene Scores und von den Positionsbestimmungseinrichtungen ermittelte Positionsdaten von den Eingabegeräten an den Lokalserver übertragen werden. Die Ausstattung jedes auf dem Golfplatz anwesenden Spielers mit einem solchen Eingabegerät eröffnet eine Vielzahl von Möglichkeiten, die Verwaltung eines Golfplatzes und auch die Ausrichtung eines Turniers in wesentlichen Punkten zu automatisieren und entsprechend zu vereinfachen, wodurch Personal und Kosten eingespart werden können. Anhand der von den Eingabegeräten an den Lokalserver übermittelten Positionsdaten lassen sich die Positionen der einzelnen Spieler auf dem Golfplatz zu jedem Zeitpunkt ermitteln. Auf diese Weise können Spielabläufe aus der Ferne analysiert und das Golfplatzpersonal bedarfsgerecht eingesetzt werden, wie es nachfolgend noch näher erläutert wird. Werden von Spielern in die Eingabegeräte eingegebene Scores zusammen mit den aktuellen Positionsdaten an den Lokalserver übermittelt, so kann der Lokalserver die Scores anhand der Positionsdaten der richtigen Spielbahn zuordnen, was eine automatische Weiterverarbeitung der Scores innerhalb des Lokalservers unter Einsatz eines geeignet eingerichteten Computerprogramms gestattet. Entsprechend können die Auswertung einzelner Scores und die Auswertung eines Turniers vollständig automatisiert werden. Als Eingabegerät kann beispielsweise ein Smartphone verwendet werden, wobei die Kopplung zwischen dem Smartphone und dem Eingabegerät über die Installation einer speziellen Software auf dem Smartphone erfolgt. Bevorzugt werden jedoch eigens für das erfindungsgemäße Golfplatzverwaltungssystem konzipierte Eingabegeräte verwendet. Auf diese Weise wird die Störanfälligkeit des erfindungsgemäßen Golfplatzverwaltungssystems verbessert. Ferner werden auch Manipulationen des Systems von außen erschwert. Zur Positionsermittlung kann ein GPS-, ein DGPS- oder ein lokales Positionserfassungsverfahren verwendet werden, das eigens auf dem Golfplatz zur Nutzung des erfindungsgemäßen Systems installiert ist.

Gemäß einer Ausgestaltung der vorliegenden Erfindung sind die Eingabegeräte derart eingerichtet, dass jedes Eingabegerät eine ihm eigene Eingabegerätkennung zusammen mit den Scores und den Positionsdaten an den Lokalserver übermittelt. Die Eingabegerätkennung bietet eine einfache Möglichkeit, das Eingabegerät und somit den dieses mitführenden Spieler automatisch zu identifizieren.

Die Eingabegeräte und/oder der Lokalserver ist/sind bevorzugt derart eingerichtet, dass jeder Eingabegerätkennung spielerspezifische Daten zugeordnet werden können, wobei die Eingabe der spielerspezifischen Daten über den Lokalserver und/oder über die Eingabegeräte erfolgen kann. Eine Eingabe der spielerspezifischen Daten über die Eingabegeräte ist dahingehend von Vorteil, dass die Spielleitung entlastet werden kann, indem jeder Spieler seine spielerspezifischen Daten selbst über sein eigenes oder ein ihm ausgehändigtes Eingabegerät eingibt.

Der Lokalserver und das Leaderboard sind bevorzugt derart eingerichtet und miteinander gekoppelt, dass von dem Lokalserver empfangene Scores automatisch in einem Scoremodul des Lokalservers weiterverarbeitet, an das Leaderboard übermittelt und auf diesem angezeigt werden. Entsprechend kann die Anzeige des Leaderboards quasi in Echtzeit vollautomatisch auf dem aktuellen Stand gehalten werden.

Das Scoremodul ist vorteilhaft derart eingerichtet, dass es jeweils zwei Eingabegeräte einander zuordnet, von diesen Eingabegeräten empfangene Scores miteinander vergleicht und, wenn die Scores miteinander übereinstimmen, den Score automatisch an das Leaderboard übermittelt, oder wenn die Scores nicht miteinander übereinstimmen, automatisch eine Fehlermeldung generiert und an die entsprechenden Eingabegeräte übermittelt, insbesondere zusammen mit einer Aufforderung zur erneuten Scoreeingabe. Wie es eingangs bereits erläutert wurde, zählt jeder Spieler seine eigenen Schläge sowie die Schläge eines anderen Spielers seines Flights. Mit anderen Worten bildet der einen Spieler zählende Mitspieler ein Kontrollorgan. Übermittelt jeder Spieler nach Abschluss seiner Spielbahn über sein Eingabegerät seinen eigenen Score sowie den Score des von ihm gezählten Mitspielers an den Lokalserver, so empfängt der Lokalserver für jeden Spieler zwei Scores. Stimmen diese miteinander überein, so kann davon ausgegangen werden, dass das übermittelte Ergebnis korrekt ist, so dass dieses automatisch an das Leaderboard übermittelt wird. Stimmen die Scores nicht miteinander überein, so liegt ein Widerspruch vor, weshalb automatisch eine Fehlermeldung generiert und an die entsprechenden Eingabegeräte übermittelt wird. Die Spieler können daraufhin die Scores erneut eingeben und übermitteln.

Gemäß einer Variante der vorliegenden Erfindung ist das Scoremodul derart eingerichtet, dass es zwei Eingabegeräte einander zuordnet, den von jedem Eingabegerät empfangenen Score an das diesem Eingabegerät zugeordnete Eingabegerät zur Bestätigung übermittelt und, wenn eine Bestätigung erfolgt, den Score automatisch an das Leaderboard übermittelt oder, wenn keine Bestätigung erfolgt, automatisch eine Fehlermeldung generiert und an dasjenige Eingabegerät übermittelt, von dem es den Score empfangen hat, insbesondere zusammen mit einer Aufforderung zur erneuten Scoreeingabe. Bei dieser Variante kann beispielsweise jeder Spieler über das ihm zugeordnete Eingabegerät ausschließlich den Score des von ihm zu zählenden Spielers eingeben und an den Lokalserver übermitteln. Der von dem Lokalserver empfangene Score wird dann an das Eingabegerät des gezählten Spielers zusammen mit einer Aufforderung übermittelt, den Score zu bestätigen. Bestätigt der gezählte Spieler den Score, so wird dieser automatisch am Leaderboard angezeigt. Bestätigt der gezählte Spieler den Score hingegen nicht, so erhält der zählende Spieler über sein Eingabegerät eine Fehlermeldung und wird dazu aufgefordert, den Score des von ihm gezählten Spielers erneut einzugeben, woraufhin die Prozedur wiederholt wird.

Gemäß einer Ausgestaltung der vorliegenden Erfindung weist das Golfplatzverwaltungssystem mehrere an Golfbags befestigbare elektronische und mit einer Positionsbestimmungsvorrichtung versehene Bagtags auf, wobei der Lokalserver und die Bagtags derart eingerichtet und miteinander gekoppelt sind, dass von den Positionsbestimmungseinrichtungen ermittelte Positionsdaten der Bagtags von den Bagtags an den Lokalserver übertragen werden. Derartige Bagtags ermöglichen eine automatische Überwachung des Spielbetriebs ohne den Einsatz der zuvor beschriebenen Eingabeeinrichtungen oder zusätzlich zu den Eingabeeinrichtungen. Bevorzugt sind die Bagtags derart eingerichtet, dass jedes Bagtag eine ihm eigene Bagtagkennung zusammen mit den Positionsdaten an den Lokalserver übermittelt. Entsprechend kann der Lokalserver diejenigen Bagtags identifizieren, von denen er die Positionsdaten empfängt.

Auch können die Bagtags derart eingerichtet sein, dass auf diesen auslesbare spielerspezifische Daten speicherbar sind, die beispielsweise an eine Eingabeeinrichtung übermittelt werden können. So kann beispielsweise ein Spieler am Anfang eines Turniers die auf seinem Bagtag gespeicherten personenspezifischen Daten einfach an eine ihm von der Spielleitung ausgehändigte Eingabeeinrichtung senden, um letztere zu personifizieren.

Gemäß einer Ausgestaltung der vorliegenden Erfindung sind die Eingabegeräte und/oder die Bagtags derart eingerichtet, dass von ihren Positionsbestimmungseinrichtungen generierte Positionsdaten automatisch an den Lokalserver übermittelt und in einem Positionsdatenmodul des Lokalservers weiterverarbeitet werden, wobei das Generieren und Übermitteln von Positionsdaten in vorab festgelegten regelmäßigen Zeitabständen erfolgen kann. Unabhängig von einem Turnierbetrieb kann auf diese Weise der Spielfluss auf einem Golfplatz nachvollzogen werden. Wird dabei beispielsweise festgestellt, dass ein Flight zu langsam voran kommt und einen nachfolgenden Flight aufhält, so kann die Platzaufsicht entsprechend reagieren.

Das Positionsdatenmodul weist bevorzugt eine vorab definierte digitale Golfplatzübersichtskarte auf, der die empfangenen Positionsdaten automatisch zugeordnet und auf der die Positionsdaten automatisch angezeigt werden, bevorzugt zusammen mit der bisherigen Spielzeit des Spielers. Auf diese Weise lässt sich der Spielbetrieb sehr gut graphisch darstellen und verfolgen.

Vorteilhaft ist das Positionsdatenmodul derart eingerichtet, dass, wenn eine empfangene aktuelle Position eines Eingabegerätes und/oder eines Bagtags mit einem vorab definierten Positionsbereich auf dem Golfplatz übereinstimmt, automatisch eine Nachricht und/oder ein Befehl generiert und an das entsprechende Eingabegerät und/oder an ein weiteres Zusatzgerät des Golfplatzverwaltungssystems übermittelt wird, bei dem es sich um ein Display und/oder um eine akustische Wiedergabevorrichtung handelt. Auf diese Weise können den einzelnen Spielern in Abhängigkeit von ihrer aktuellen Position Informationen übermittelt werden. Diese Informationen können den Golfplatz oder den Spielbetrieb betreffen. So kann einem Spieler beim Betreten des Abschlags einer Spielbahn beispielsweise automatisch die aktuelle Fahnenposition mitgeteilt werden. Auch kann ein Spieler gewarnt werden, sobald er einen gesperrten Bereich des Golfplatzes betritt. Alternativ ist es aber auch möglich, personenspezifzierte Werbeinformationen oder dergleichen zu übermitteln. Dies kann beispielsweise über eines der genannten Zusatzgeräte erfolgen, das auf dem Golfplatz aufgestellt ist.

Gemäß einer weiteren Ausgestaltung der vorliegenden Erfindung ist das Positionsdatenmodul derart eingerichtet, dass es Abstände zwischen Eingabegeräten und/oder Bagtags aufeinander folgender Flights berechnet und bei Unterschreitung eines vorab definierten Sicherheitsabstandes automatisch eine Warnmeldung generiert und an dasjenige Eingabegerät des hinteren Flights aussendet, das den Sicherheitsabstand unterschritten hat, oder aber auch an sämtliche Eingabegeräte des hinteren Flights. Auf diese Weise können Unfälle vermieden werden.

Das Positionsdatenmodul ist bevorzugt derart eingerichtet, dass es einen Warnhinweis generiert, wenn der Sicherheitsabstand mehrfach von einem Eingabegerät unterschritten wird. Wird der Sicherheitsabstand mehrfach unterschritten, so kann darauf geschlossen werden, dass ein schnell spielender Flight von einem vorweg spielenden langsamen Flight nicht durchlassen wird. Entsprechend kann auch hier die Platzaufsicht eingreifen.

Vorteilhaft sind die Eingabegeräte und/oder die Bagtags und der Lokalserver derart eingerichtet und miteinander gekoppelt, dass ein Spieler seine aktuelle Position auf dem Golfplatz durch manuelles Betätigen der Eingabeeinrichtung mittels der Positionsbestimmungseinrichtung erfassen lassen und an den Lokalserver übermitteln kann. Erfasst ein Spieler vor jedem Schlag seine Position und übermittelt diese an den Lokalserver, so können die einzelnen Positionen in einem Trainingsmodul gespeichert und zu einem späteren Zeitpunkt abgerufen werden. Dies ermöglicht einem Spieler die nachträgliche Analyse seines Spiels. Das Trainingsmodul kann mit einer eigenen Software ausgestattet sein, die ein spezielles Training eines Spielers und eine Trainingsauswertung ermöglicht. So können dem Spieler über die Software beispielsweise Vorgaben bezüglich des zu verwenden Schlägers, der angestrebten Landezone des zu schlagenden Balls oder dergleichen gemacht werden, um die Platztaktik zu verbessern, ein Korridortraining durchzuführen, etc.

Gemäß einer Ausgestaltung der vorliegenden Erfindung umfasst das Golfplatzverwaltungssystem verteilt auf dem Golfplatz angeordnete und zur Erfassung von Personen eingerichtete Detektoren, welche die Anzahl vorbeigehender Personen erfassen und automatisch an den Lokalserver übermitteln, wobei der Lokalserver die übermittelte Personenzahl automatisch mit der Anzahl der im Bereich des übermittelten Detektors vorhandenen Eingabegeräte und/oder Bagtags vergleicht und eine Warnmeldung ausgibt, wenn die Anzahlen nicht miteinander übereinstimmen. Auf diese Weise können Spieler identifiziert werden, die kein Eingabegerät oder Bagtag mit sich tragen und sich gegebenenfalls unberechtigt Zutritt auf den Golfplatz verschafft haben. Bei den Detektoren kann es sich um Kamerasysteme mit automatischer Bildanalyse zur Ermittlung der Personenanzahl, um Bewegungsmelder oder dergleichen handeln.

Gemäß einer Ausgestaltung der vorliegenden Erfindung umfasst das Golfplatzverwaltungssystem mobile, eine Positionsbestimmungseinrichtung aufweisende und mit dem Lokalserver kommunizierende Greenkeepertags, die derart eingerichtet sind, dass sie, bevorzugt in regelmäßigen Zeitabständen, Positionsdaten an den Lokalserver übermitteln. Bevorzugt wird ein solcher Greenkeepertag von jedem Greenkeeper mitgeführt, so können die Positionen der Greenkeeper in das zuvor beschriebene Sicherheitskonzept des Golfplatzverwaltungssystems integriert werden. Beispielsweise kann ein Spieler und/oder ein Greenkeeper gewarnt werden, sobald sich der Greenkeeper in Schlagdistanz des Spielers befindet. Darüber hinaus ermöglichen derartige Greenkeppertags auch die Koordinierung der Greenkeeper und die Auswertung der von Ihnen geleisteten Arbeit.

Gemäß einer weiteren Ausgestaltung der vorliegenden Erfindung weist das Golfplatzverwaltungssystem an den Fahnen der einzelnen Löcher eines Golfplatzes positionierbare Fahnenpositionsbestimmungseinrichtungen auf, wobei der Lokalserver und die Fahnenpositionsbestimmungseinrichtungen derart eingerichtet sind, dass die von den Fahnenpositionsbestimmungseinrichtungen erfassten Fahnenpositionsdaten an den Lokalserver übermittelbar sind. Entsprechend können die aktuellen Fahnenpositionen im Lokalserver gespeichert und an die Eingabeeinrichtungen der Spieler oder an auf dem Golfplatz aufgestellte Zusatzgeräte übermittelt werden.

Weitere Merkmale und Vorteile der vorlegenden Erfindung werden anhand der nachfolgenden Beschreibung einer Ausführungsform eines erfindungsgemäßen Golfplatzverwaltungssystems unter Bezugnahme auf die beiliegende Zeichnung deutlich.

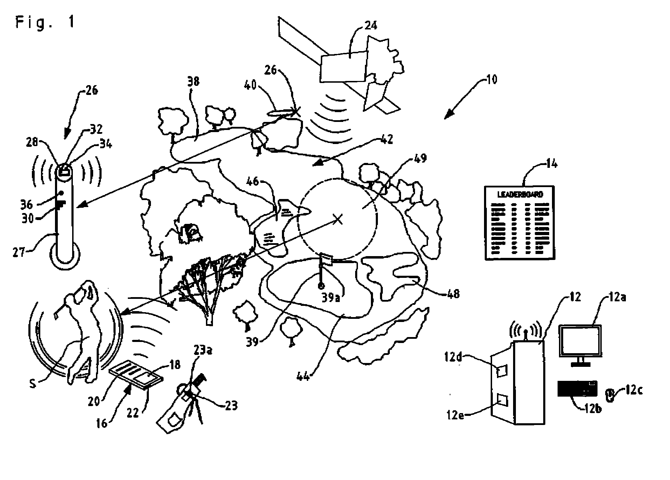

Figur 1 zeigt schematisch ein Golfplatzverwaltungssystem 10 gemäß einer Ausführungsform der vorliegenden Erfindung, das zum Überwachen des Spielbetriebs auf einem Golfplatz und zur Ausrichtung und Leitung eines auf dem Golfplatz stattfindenden Golfturniers dient. Das Golfplatzverwaltungssystem 10 umfasst einen Lokalserver 12, der beispielsweise im Sekretariat eines Golfclubs aufgestellt ist und bei dem es sich um einen handelsüblichen Rechner handeln kann, der zum Empfangen drahtlos übermittelter Daten ausgelegt ist. An den Lokalserver 12 sind in üblicher Weise ein Monitor 12a, eine Tastatur 12b und eine Maus 12c angeschlossen. Ferner umfasst das Golfplatzverwaltungssystem 10 ein elektronisches Leaderboard 14, das drahtgebunden oder drahtlos mit dem Lokalserver 12 verbunden ist. Das Leaderboard 14 dient dazu, während eines auf dem Golfplatz stattfindenden Turniers den Zuschauern die aktuellen Scores der einzelnen am Turnier teilnehmenden Spieler anzuzeigen. Entsprechend ist das Leaderboard 14 auf dem Golfplatz an einer gut einsehbaren Position aufgestellt - meist in der Nähe des Grüns der letzten Spielbahn, wo häufig auch eine Zuschauertribüne errichtet ist, wobei das Leaderboard auch im Clubhaus oder an anderen Stellen über Monitore angezeigt oder via Internet zugänglich gemacht werden kann. Bestandteil des Golfplatzverwaltungssystems 10 sind ferner mehrere tragbare Eingabegeräte 16, die von auf dem Golfplatz spielenden Spielern mitgeführt werden können. Die Eingabegeräte 10 umfassen jeweils ein Display 18 und eine Tastatur 20. Alternativ können die Eingabegeräte 16 aber auch beispielsweise ein Touchscreen oder dergleichen aufweisen. Ferner ist jedes Eingabegerät 16 mit einer Positionsbestimmungseinrichtung 22 versehen, bei der es sich vorliegend um einen GPS-Empfänger handelt, der von Satelliten 22 ausgesendete Signale empfängt und basierend auf den empfangenen Signalen die aktuelle Position bestimmt. Die Eingabegeräte 16 und der Lokalserver 12 sind derart eingerichtet und miteinander gekoppelt, dass zwischen diesen drahtlos Daten über nicht näher dargestellte Sende- und Empfangseinrichtungen ausgetauscht werden können. Jedes Eingabegerät 16 ist hierzu mit einer ihm eigenen Eingabegerätkennung versehen, die jedem von einem Eingabegerät 16 an den Lokalserver 12 gesendeten Datensatz automatisch beigefügt wird. Zusätzlich werden jedem Datensatz personenspezifische Daten des Spielers zugeordnet, wie beispielsweise der Name des Spielers, eine Mitgliedsnummer oder dergleichen. Auf diese Weise kann der Lokalserver 12 ein sendendes Eingabegerät 16 und den dieses mitführenden Spieler identifizieren. Auch können die Eingabegeräte 16 einzeln vom Lokalserver 12 adressiert werden. Die Eingabegeräte 16 sind derart eingerichtet, dass die von Spielern S in diese eingegebene Scores und von den Positionsbestimmungseinrichtungen 22 ermittelte Positionsdaten automatisch an den Lokalserver 12 übertragen werden.

Das Golfplatzverwaltungssystem 10 umfasst ferner mehrere Bagtags 23, die jeweils mit einer Bagtag-Positionsbe- stimmungseinrichtung 23a versehen und an den Bags der Spieler angeordnet sind. Die Bagtags 23 sind derart eingerichtet, dass sie von den Bagtag-Positionsbestimmungseinrichtungen 23a ermittelte Positionsdaten zusammen mit einer Bagtag-Gerätkennung und gegebenenfalls im Bagtag 23 hinterlegten personenspezifischen Daten an den Lokalserver 12 übermitteln.

Der Lokalserver 12 ist derart eingerichtet, dass er von den Eingabegeräten 16 und/oder den Bagtags 23 übermittelte Datensätze anhand der jeweiligen Eingabegerät- bzw. Bagtag-Kennung identifiziert und weiterverarbeitet. Hierzu ist der Lokalserver 12 mit entsprechender Hard- und Software ausgestattet. Zur Weiterverarbeitung der übermittelten Scores umfasst er ein Scoremodul 12d und zur Weiterverarbeitung der empfangenen Positionsdaten ein Positionsdatenmodul 12e. Bestandteil des Positionsdatenmoduls 12e ist eine auf dem Monitor 12a anzeigbare digitale Golfplatzübersichtskarte, auf der die Spielbahnen des Golfplatzes, die Driving-Range, die Übungsgrüns etc. verzeichnet sind und die von den Eingabegeräten 16 empfangenen Positionsdaten eingetragen werden können.

Das Golfplatzverwaltungssystem 10 umfasst des weiteren mehrere Zusatzgeräte 26, die verteilt auf dem Golfplatz an vorbestimmten Positionen angeordnet sind, wie beispielsweise an den Abschlägen der einzelnen Spielbahnen oder dergleichen. Das in Figur 1 beispielhaft dargestellte Zusatzgerät 26 umfasst ein säulenartig oder auf andere Art ausgebildetes Gehäuse 27, das ein Display 28, einen Lautsprecher 30, ein bevorzugt grünes Anzeigelicht 32, ein bevorzugt rotes Anzeigelicht 34 sowie einen Detektor 36 in Form einer Bewegungs- oder Personenerkennungsvorrichtung aufnimmt. Alternativ ist natürlich auch ein anderer Aufbau denkbar. Die Zusatzgeräte 26 sind ebenfalls drahtgebunden oder drahtlos mit dem Lokalserver 12 verbunden, so dass zwischen den Zusatzgeräten 26 und dem Lokalserver 12 eine Datenübermittlung stattfinden kann. Zusätzlich können die Zusatzgeräte 26 Einrichtungen aufweisen, die die Positionsbestimmungsgenauigkeit des GPS verbessern, beispielsweise einen ortsfesten GPS-Empfänger, der eine Referenzstation zur Realisierung eines DGPS-Systems bildet, oder Einrichtungen, die ein weiteres Positionsbestimmungsverfahren als Alternative zum GPS ermöglichen.

In Figur 1 ist eine Spielbahn 38 eines Golfplatzes mit einem Abschlag 40, einem Fairway 42, einem Grün 44, verschiedenen Hindernissen, vorliegend in Form eines Teiches 46 und eines Bunkers 48, und einem definierbaren Sicherheitsbereich 49 dargestellt. Das Zusatzgerät 26 ist bei der Spielbahn 38 in unmittelbarer Umgebung des Abschlags 40 aufgestellt.

Nachfolgend wird die Funktionsweise des Golfplatzverwaltungssystems 10 anhand von Beispielen näher erläutert.

### 1) Verwaltung des normalen Spielbetriebs

Nach Betreten des Golfplatzes erhält jeder Spieler S ein Eingabegerät 16. Auf den Eingabegeräten 16 ist ein Modus aktiviert, gemäß dem jedes Eingabegerät 16 in regelmäßigen, vorab definierten Zeitabständen seine Position unter Verwendung der Positionsbestimmungseinrichtung 22 ortet und automatisch zusammen mit seiner Eingabegerätkennung an den Lokalserver 12 übermittelt. Entsprechend können die aktuellen Positionen der Spieler S über die auf dem Monitor 12a des Lokalservers 12 angezeigte Golfplatzübersichtskarte verfolgt und/oder gespeichert werden. Alternativ oder zusätzlich können auch die an den Bags der Spieler S angeordneten Bagtags 23 in regelmäßigen, vorab definierten Zeitabständen ihre Position unter Verwendung der jeweiligen Bagtag-Positionsbestimmungseinrichtungen 23a orten und automatisch zusammen mit der zugehörigen Bagtag-Gerätkennung an den Lokalserver 12 senden.

Anhand der graphischen Darstellung der Spieler S auf der Golfplatzübersichtskarte können beispielsweise den Spielfluss aufhaltende Flights schnell und einfach identifiziert werden. Entsprechend ist für die Golfplatzleitung ein gezielter Eingriff in den Spielbetrieb möglich. So kann ein zu langsam spielender Flight von der Golfplatzleitung dazu aufgefordert werden, schneller zu spielen oder den folgenden Flight durchspielen zu lassen. Dies kann persönlich erfolgen, indem sich ein Mitglied der Golfplatzleitung zu dem entsprechenden Flight begibt, oder über entsprechende Nachrichten, die an die Eingabegeräte 16 der Spieler S des Flights unter Verwendung des Lokalservers 12 übermittelt werden, zum Beispiel via Textnachricht oder eine Sprachausgabe am Zusatzgerät 26. Auch kann der vorausgehende zu langsame Flight dem nachfolgenden Flight ein Signal oder eine Meldung auf das Eingabegerät 16 übermitteln, welche dem nachfolgenden Flight das Durchspielen gestattet.

Ferner ist das Positionsdatenmodul im besagten Modus derart eingerichtet, dass es Abstände zwischen Eingabegeräten 16 aufeinander folgender Flights berechnet und bei Unterschreitung eines vorab definierten oder zur Laufzeit bestimmten Sicherheitsabstandes automatisch eine Warnmeldung generiert und an dasjenige Eingabegerät 16 des hinteren Flights aussendet, das den Sicherheitsabstand unterschreitet. Entsprechend ist es möglich, ein versehentlich zu dichtes Aufspielen aufeinander folgender Flights und die damit einhergehende Verletzungsgefahr zu eliminieren. Auch generiert das Positionsdatenmodul automatisch einen Warnhinweis, wenn der Sicherheitsabstand mehrfach unterschritten wird. Dies bedeutet, dass ein schnellerer Flight von einem vorangehenden langsameren Flight mehrfach aufgehalten wird. In diesem Fall kann wiederum die Golfplatzleitung tätig werden.

Darüber hinaus kann anhand der von den Eingabegeräten 16 an den Lokalserver 12 übermittelten Positionsdaten festgestellt werden, ob sich ein Spieler S im Umfeld eines Zusatzgerätes 26 befindet. Ist dies der Fall, so können über das Display 28 und/die Lautsprecher 30 Informationen an den entsprechenden Spieler S übermittelt werden. Bei diesen Informationen kann es sich um die Spielbahn 38 betreffende Informationen handeln, wie beispielsweise Informationen über die aktuelle Position der Fahne, gesperrte Spielbahnbereiche oder dergleichen, um Werbeinformationen, etc. Die Ermittlung der Fahnenposition erfolgt vorliegend über eine an der Fahne 39, am Fahnenstock oder am Locheinsatz vorgesehenen Fahnenpositionsbestimmungseinrichtung 39a, die die aktuelle Fahnenposition an den Lokalserver 12 übermittelt. Darüber hinaus kann den Spielern S über die verschiedenfarbigen Anzeigelichter 32 und 34 angezeigt werden, ob der Abschlag 40 freigegeben ist (grün) oder nicht (rot). Eine Sperrung des Abschlags kann beispielsweise so lange erfolgen, bis der zuvor genannte Sicherheitsabstand zum vorausgehenden Flight gewahrt ist.

Eine Speicherung der Positionsdaten ist beispielsweise dann sinnvoll, wenn ein Spieler S seine Trainings- und Spielzeiten automatisch erfassen lassen will. Hierzu ist die Golfplatzübersichtskarte in Trainings- und Spielbereiche unterteilt, so dass die Aufenthaltsdauer eines Spielers S in diesen Bereichen erfasst und gespeichert werden kann. Weiter ist eine dauerhafte Speicherung sämtlicher Spiel- und Positionsdaten auf dem Lokalserver 12 nützlich, um clubinterne, landes- oder bundesweite sowie auch internationale Datenerhebungen und Datenanalysen durchzuführen. So können beispielsweise Wirkungsgrad und Auslastung der gesamten Anlage analysiert werden, oder dergleichen.

Es sollte klar sein, dass Eingabegeräte 16 auch an jedes Mitglied eines Golfclubs oder eines Golfverbandes ausgegeben werden können. Entsprechend ist es nicht erforderlich, an jeden Spieler S beim Betreten des Golfplatzes S ein Eingabegerät 16 auszuhändigen, wodurch Zeit und Personal eingespart werden können. Ein weiterer Vorteil besteht darin, dass jedes Eingabegerät 16 bzw. die zugehörige Eingabegerätkennung fest einem Spieler S zugeordnet werden kann, was die Verwaltung der von den Eingabegeräten 16 übermittelten Daten sehr erleichtert. Auch kann der Funktionsbereich der Eingabegeräte 16 stark erweitert werden. So lassen sich mit den Eingabegeräten sämtliche Spielerdaten verknüpfen, wie beispielsweise Handicap, Heimatclub, in der Vergangenheit gespielte Turniere, etc.

Unter Verwendung der in den Zusatzgeräten 26 integrierten Detektoren 36 wird die Anzahl vorbeigehender Personen erfasst und automatisch an den Lokalserver 12 übermittelt. Der Lokalserver 12 vergleicht die übermittelte Personenanzahl automatisch mit der Anzahl der im Bereich des übermittelnden Detektors 36 vorhandenen Eingabegeräte 16 und/oder Bagtags 23 generiert dann eine Warnmeldung, wenn die Anzahlen nicht miteinander übereinstimmen. Auf diese Weise können Spieler S identifiziert werden, die kein Eingabegerät 16 und/oder Bagtag 23 mit sich tragen und sich gegebenenfalls unberechtigt Zutritt auf den Golfplatz verschafft haben. Entsprechend kann die Golfplatzleitung beispielsweise gezielte Greenfee-Kontrollen durchführen.

### 2) Verwaltung des Trainings einzelner Spieler

Die Möglichkeit, die Trainingszeiten eines Spielers S auf der Driving-Range, auf dem Übungsgrün oder auf sonstigen Trainingsbereichen des Golfplatzes anhand der in regelmäßigen Zeitabständen von der Eingabeeinrichtung 16 an den Lokalserver 12 übermittelten Positionsdaten zu erfassen, wurde zuvor bereits beschrieben.

Darüber hinaus sind die Eingabeeinrichtungen 16 und der Lokalserver 12 derart eingerichtet und miteinander gekoppelt, dass ein Spieler S seine aktuelle Position auf dem Golfplatz durch manuelles Betätigen der Eingabeeinrichtung 16 mittels der Positionsbestimmungseinrichtung erfassen lassen und an den Lokalserver 12 übermitteln kann. Entsprechend kann ein Spieler S vor jedem seiner Schläge seine Position erfassen lassen und diese an den Lokalserver 12 übermitteln. Im Positionsdatenmodul werden die Daten dann einer gesonderten Golfplatzübersichtskarte zugeordnet und gespeichert. Entsprechend kann ein Spieler S die ihm bzw. seinem Eingabegerät 16 zugeordneten gespeicherten Daten zu einem späteren Zeitpunkt abgerufen und auf Wunsch ausdrucken, was ihm und/oder einem Trainer eine genaue Analyse seines Spiels ermöglicht.

Auch sind die Eingabegeräte 16 und der Lokalserver 12 derart eingerichtet, dass sich ein Spieler S die Spielbahn, auf der er sich gerade befindet, sowie seine aktuelle Position auf dem Display 18 seines Eingabegerätes 16 anzeigen lassen kann, beispielsweise in Form eines Ausschnittes der zuvor genannten Golfplatzübersichtskarte, auf dem die aktuelle Position markiert ist. Über das Display 18 kann sich ein Spieler S zudem Entfernungen anzeigen lassen, wie beispielsweise die aktuelle Distanz zu den Hindernissen 46 und 48 oder zum Grün 44. Diese Informationen kann der Spieler S dann in seine Spielstrategie einfließen lassen. Darüber hinaus sind die Eingabegeräte 16 und der Lokalserver 12 auch derart eingerichtet, dass sich ein Spieler S auf dem Display 18 zu Trainingszwecken Landezonen vorschlagen lassen kann, in denen der Ball beim nächsten Schlag landen sollte, wobei der Lokalserver 12 die Landezone unter Berücksichtigung der Spielstärke des Spielers S berechnet. Nach Übermittlung der nächsten Schlagposition durch den Spieler S vergleicht der Lokalserver dann die IstPosition des Spielers S mit der zuvor über das Display 18 angezeigten Landezone, wertet das Ergebnis aus und speichert dieses. Somit steht dem Spieler S eine weitere Analysemöglichkeit seines Spiels zur Verfügung.

### 3) Verwaltung eines Turniers

Zu Beginn eines Turniers bekommt jeder Spieler S, der noch kein Eingabegerät 16 hat, von der Turnierleitung ein Eingabegerät 16 ausgehändigt.

Auf dem Eingabegerät 16 können bereits turnierspezifische Informationen hinterlegt sein, die sich der Spieler S über das Display 18 anzeigen lassen kann. Beispielswiese können auf dem Eingabegerät 16 Informationen über die Flightpartner des Spielers S, über die Spielart des Turniers, über den von dem Spieler S zu zählenden Mitspieler, über die Fahnenpositionen, über gesperrte Bereiche des Golfplatzes oder dergleichen gespeichert sein.

Alternativ oder zusätzlich können dem Spieler S Informationen über die auf dem Golfplatz aufgestellten Zusatzgeräte 26 übermittelt werden. Die Eingabegeräte 16, der Lokalserver 12 und die Zusatzgeräte 26 sind zu diesem Zweck derart eingerichtet, dass ein Spieler S eine Informationsanforderung an den Lokalserver 12 oder an das Zusatzgerät 26 sendet, woraufhin ihm die angeforderten Informationen über das entsprechende Zusatzgerät 26 übermittelt werden. Zur Identifikation des Zusatzgerätes 26 verwendet der Lokalserver 12, wenn das Zusatzgerät 26 von dem Spieler S nicht direkt über Bluetooth oder dergleichen adressiert wird, die von dem Eingabegerät übermittelten aktuellen Positionsdaten. Alternativ kann ein Zusatzgerät 26 Informationen auch automatisch ausgeben, sobald in seinem Umfeld ein Spieler S anhand der von den Eingabegeräten 16 an den Lokalserver 12 gesendeten aktuellen Positionsdaten lokalisiert wird.

Während des Spiels gibt jeder Spieler S die Anzahl der Schläge des von ihm zu zählenden Mitspielers sowie seinen eigenen Score nach Beenden einer Spielbahn in sein Eingabegerät 16 ein. Hierzu wird an jeden Spieler S bei Erreichen des nächsten Abschlags von dem Lokalserver 12 eine entsprechende Aufforderung gesendet. Das Eintreffen eines Spielers S am nächsten Abschlag wird wiederum basierend auf den an den Lokalserver 12 übermittelten Positionsdaten festgestellt.

Das Scoremodul ist derart eingerichtet, dass es die Eingabegeräte 16 des zählenden und des zu zählenden Spielers S einander zuordnet. Die voneinander zugeordneten Eingabegeräten 16 empfangenen Scores werden von dem Scoremodul automatisch miteinander verglichen und, wenn sie miteinander übereinstimmen, automatisch an das Leaderboard übermittelt und auf diesem angezeigt. Stimmen die voneinander zugeordneten Eingabegeräten 16 gesendeten Scores hingegen nicht überein, so liegt ein Widerspruch vor, weshalb automatisch eine Fehlermeldung generiert und an die entsprechenden Eingabegeräte 16 gesendet wird, insbesondere zusammen mit einer Aufforderung zur erneuten Scoreeingabe. Dieser Vorgang wird so häufig wiederholt, bis ein bestätigtes Ergebnis vorliegt, das dann auf dem Leaderboard 14 angezeigt wird.

Die Endauswertung aller Spielergebnisse kann ebenfalls automatisch vorgenommen werden, sobald die Scores sämtlicher an dem Turnier teilnehmender Spieler S vollständig unter Verwendung der Eingabegeräte 16 an den Lokalserver 12 übermittelt wurden. Natürlich sind gegebenenfalls auch manuelle Änderungen durch die Spielleitung weiterhin möglich.

Auch wenn dies in Figur 1 nicht näher dargestellt ist, kann das Golfplatzverwaltungssystem 10 auch Greenkeepertags umfassen, die mit einer Positionsbestimmungseinrichtung versehen sind und ermittelte Positionsdaten an den Lokalserver 12 übermitteln. Entsprechend kann auch die Position eines einen Greenkeepertag mitführenden Greenkeepers jederzeit durch das Golfplatzverwaltungssystem 10 erfasst werden. Ebenso wie die Eingabegeräte 22 und die Bagtags 23 können auch die Greenkeepertags-Gerätkennungen und/oder personenspezifische Daten zusammen mit den Positionsdaten übermitteln. Derartige Greenkeepertags gestatten die Einbindung des Greenkeeperpersonals in das zuvor beschriebene Sicherheitskonzept des erfindungsgemäßen Golfplatzverwaltungssystems 10. Darüber hinaus kann natürlich auch die Koordinierung des Greenkeeperpersonals in einfacher Weise erfolgen. Ferner kann die Arbeit des Greenkeeperpersonals analysiert werden. Auch können vom Greenkeeper Vorgaben an die Mitarbeiter ausgegeben werden durch Darstellung auf dem Eingabegerät 16.

Das erfindungsgemäße Golfplatzverwaltungssystem zeichnet sich insbesondere dadurch aus, dass die Verwaltung des normalen Spielbetriebs, des Trainings einzelner Spieler S und eines Turniers zu großen Teilen automatisiert werden können, was mit einem geringen Zeit- und Personalaufwand einhergeht. Entsprechend können auch die Kosten minimiert werden.

## Patentansprüche

1. Golfplatzverwaltungssystem (10) mit einem Lokalserver (12), einem mit dem Lokalserver (12) verbundenen elektronischen Leaderboard (14) und mehreren tragbaren, eine Positionsbestimmungseinrichtung (22) aufweisenden und mit dem Lokalserver (12) kommunizierenden Eingabegeräten (16), wobei die Eingabegeräte (16) und der Lokalserver (12) derart eingerichtet und miteinander gekoppelt sind, dass von Spielern (S) in die Eingabegeräte (16) eingegebene Scores und von den Positionsbestimmungseinrichtungen (22) ermittelte Positionsdaten der Eingabegeräte (16) von den Eingabegeräten (16) an den Lokalserver (12) übertragen werden.

2. Golfplatzverwaltungssystem (10) nach Anspruch 1, **dadurch gekennzeichnet, dass** die Eingabegeräte (16) derart eingerichtet sind, dass jedes Eingabegerät (16) eine ihm eigene Eingabegerätkennung zusammen mit den Scores und den Positionsdaten an den Lokalserver (12) übermittelt, wobei die Eingabegeräte (16) und/oder der Lokalserver (12) insbesondere derart eingerichtet ist/sind, dass jeder Eingabegerätkennung spielerspezifische Daten zugeordnet werden können.

3. Golfplatzverwaltungssystem (10) nach einem der vorhergehenden Ansprüche, **dadurch gekennzeichnet, dass** der Lokalserver (12) und das Leaderboard (14) derart eingerichtet und miteinander gekoppelt sind, dass von dem Lokalserver (12) empfangene Scores automatisch in einem Scoremodul (12d) weiterverarbeitet, an das Leaderboard (14) übermittelt und auf diesem angezeigt werden.

4. Golfplatzverwaltungssystem (10) nach Anspruch 3, **dadurch gekennzeichnet, dass** das Scoremodul (12d) derart eingerichtet ist, dass es jeweils zwei Eingabegeräte (16) einander zuordnet, von diesen Eingabegeräten (16) empfangene Scores miteinander vergleicht und, wenn die Scores miteinander übereinstimmen, den Score automatisch an das Leaderboard (14) übermittelt, oder, wenn die Scores nicht miteinander übereinstimmen, automatisch eine Fehlermeldung generiert und an die entsprechenden Eingabegeräte (16) übermittelt, insbesondere zusammen mit einer Aufforderung zur erneuten Scoreeingabe.

5. Golfplatzverwaltungssystem (10) nach einem der Ansprüche 1 bis 3, **dadurch gekennzeichnet, dass** das Scoremodul derart eingerichtet ist, dass es zwei Eingabegeräte (16) einander zuordnet, den von jedem Eingabegerät (16) empfangenen Score an das diesem Eingabegerät (16) zugeordnete Eingabegerät (16) zur Bestätigung übermittelt und, wenn eine Bestätigung erfolgt, den Score automatisch an das Leaderboard (14) übermittelt, oder, wenn keine Bestätigung erfolgt, automatisch eine Fehlermeldung generiert und an dasjenige Eingabegerät (16) übermittelt, von dem es den Score empfangen hat, insbesondere zusammen mit einer Aufforderung zur erneuten Scoreeingabe.

6. Golfplatzverwaltungssystem (10) nach einem der vorhergehenden Ansprüche, **dadurch gekennzeichnet, dass** dieses mehrere an Golfbags befestigbare elektronische und mit einer Positionsbestimmungsvorrichtung (23a) versehene Bagtags (23) aufweist, wobei die Lokalserver (12) und die Bagtags (23) derart eingerichtet sind, dass von den Positionsbestimmungseinrichtungen (23a) ermittelte Positionsdaten der Bagtags (23) von den Bagtags (23) an den Lokalserver (12) übertragen werden, wobei die Bagtags (23) insbesondere derart eingerichtet sind, dass jeder Bagtag (23) eine ihm eigene Bagtagkennung zusammen mit den Positionsdaten an den Lokalserver (12) übermittelt.

7. Golfplatzverwaltungssystem (10) nach einem der vorhergehenden Ansprüche, **dadurch gekennzeichnet, dass** die Eingabegeräte (16) und/oder die Bagtags (23) derart eingerichtet sind, dass von ihren Positionsbestimmungseinrichtungen (22, 23a) generierte Positionsdaten automatisch an den Lokalserver (12) übermittelt und in einem Positionsdatenmodul (12e) des Lokalservers (12) weiterverarbeitet werden, wobei das Generieren und Übermitteln von Positionsdaten insbesondere in vorab festgelegten regelmäßigen Zeitabständen erfolgt.

8. Golfplatzverwaltungssystem (10) nach Anspruch 7, **dadurch gekennzeichnet, dass** das Positionsdatenmodul (12e) eine vorab definierte digitale Golfplatzübersichtskarte aufweist, der die empfangenen Positionsdaten automatisch zugeordnet und auf der die Positionsdaten automatisch angezeigt werden, bevorzugt zusammen mit der bisherigen Spielzeit.

9. Golfplatzverwaltungssystem (10) nach Anspruch 8, **dadurch gekennzeichnet, dass** das Positionsdatenmodul (12e) derart eingerichtet ist, dass, wenn die empfangene aktuelle Position eines Eingabegerätes (16) und/oder eines Bagtags (23) mit einem vorab definierten Positionsbereich auf dem Golfplatz übereinstimmt, automatisch eine Nachricht und/oder ein Befehl generiert und an das entsprechende Eingabegerät (16) und/oder an ein weiteres Zusatzgerät (26) des Golfplatzverwaltungssystems (10) übermittelt wird, bei dem es sich um ein Display (28) und/oder um eine akustische Wiedergabevorrichtung (30) handelt.

10. Golfplatzverwaltungssystem (10) nach einem der Ansprüche 7 bis 9, **dadurch gekennzeichnet, dass** das Positionsdatenmodul (12e) derart eingerichtet ist, dass es Abstände zwischen Eingabegeräten (16) und/oder Bagtags (23) aufeinander folgender Flights berechnet und bei Unterschreitung eines vorab definierten Sicherheitsabstandes automatisch eine Warnmeldung generiert und an dasjenige Eingabegerät (16) des hinteren Flights aussendet, das den Sicherheitsabstand unterschreitet, wobei das Positionsdatenmodul (12e) insbesondere derart eingerichtet ist, dass es einen Warnhinweis generiert, wenn der Sicherheitsabstand mehrfach unterschritten wird.

11. Golfplatzverwaltungssystem (10) nach einem der Ansprüche 7 bis 10, **dadurch gekennzeichnet, dass** die Eingabegeräte (16) und/oder die Bagtags (23) und der Lokalserver (12) derart eingerichtet und miteinander gekoppelt sind, dass ein Spieler (S) seine aktuelle Position auf dem Golfplatz durch manuelles Betätigen der Eingabeeinrichtung (16) und/oder des Bagtags (23) mittels der Positionsbestimmungseinrichtung (22, 23a) erfassen lassen und an den Lokalserver (12) übermitteln kann.

12. Golfplatzverwaltungssystem (10) nach einem der vorhergehenden Ansprüche, **dadurch gekennzeichnet, dass** dieses verteilt auf dem Golfplatz angeordnete und zur Erfassung von Personen eingerichtete Detektoren (36) umfasst, welche die Anzahl vorbeigehender Personen erfassen und automatisch an den Lokalserver (12) übermitteln, wobei der Lokalserver (12) die übermittelte Personenanzahl automatisch mit der Anzahl der im Bereich des übermittelnden Detektors (36) vorhandenen Eingabegeräte (16) und/oder Bagtags (23) vergleicht und eine Warnmeldung generiert und ausgibt, wenn die Anzahlen nicht miteinander übereinstimmen.

13. Goldplatzverwaltungssystem (10) nach einem der vorhergehenden Ansprüche, **dadurch gekennzeichnet, dass** dieses mobile, eine Positionsbestimmungseinrichtung aufweisende und mit dem Lokalserver (12) kommunizierende Greenkeepertags aufweist, die derart eingerichtet sind, dass sie, bevorzugt in regelmäßigen Zeitabständen, Positionsdaten an den Lokalserver (12) übermitteln.

14. Goldplatzverwaltungssystem (10) nach einem der vorhergehenden Ansprüche, **dadurch gekennzeichnet, dass** dieses an den Fahnen (39) der einzelnen Löcher eines Golfplatzes positionierbare Fahnenpositionsbestimmungseinrichtungen aufweist, wobei der Lokalserver (12) und die Fahnenpositionsbestimmungseinrichtungen (39a) derart eingerichtet sind, dass die von den Fahnenpositionsbestimmungseinrichtungen (39a) erfassten Fahnenpositionsdaten an den Lokalserver (12) übermittelbar sind.
